# EUROPEAN PATENT SPECIFICATION

(11) **EP 1 414 832 B1**
(45) Date of publication and mention of the grant of the patent: **10.05.2006**
(21) Application number: 02787171.4
(22) Date of filing: 17.07.2002
(51) Int. Cl.: C07F 9/50, A61K 31/28

(54) **GOLD COMPOUNDS SIMULTANEOUSLY COORDINATED BY MONO- AND BIDENTATE PHOSPHINES HAVING ANTITUMORAL ACTIVITY**
GOLDVERBINDUNGEN, DIE GLEICHZEITIG MIT EIN- UND ZWEIZÄHNIGEN PHOSPHINEN KOORDINIERT SIND UND EINE ANTITUMORWIRKUNG AUFWEISEN
COMPOSES D'OR COORDONNES SIMULTANEMENT PAR DES PHOSPHINES MONO- ET BIDENTATE PRESENTANT UNE ACTIVITE ANTITUMORALE

(30) Priority: 18.07.2001 IT RM20010426
(43) Date of publication of application: 06.05.2004
(73) Proprietor: CONSIGLIO NAZIONALE DELLE RICERCHE, 00185 Roma (IT); Universita' Degli Studi Di Camerino, 62032 Camerino (IT)
(72) Inventor: CARUSO, Francesco, G. Giacomello - CNR, I-00016 Monterotondo Stazione (IT); PETTINARI, Claudio, Univ. degli studi di Camerino, I-62032 Camerino (IT)
(74) Representative: Banchetti, Marina
(86) International application number: PCT/IT2002/000469
(87) International publication number: WO 2003/008427

(56) References cited:
- MIRABELLI, CHRISTOPHER K. ET AL: "Antitumor activity of bis(diphenylphosphino)alkanes, their gold(I) coordination complexes, and related compounds" JOURNAL OF MEDICINAL CHEMISTRY (1987), 30(12), 2181-90 , 1987, XP002220104
- BAKER, R. THOMAS ET AL: "Coinage metal-catalyzed hydroboration of imines" JOURNAL OF ORGANOMETALLIC CHEMISTRY (1995), 498(2), 109-17 , 1995, XP004023860
- COLTON, RAY ET AL: "Cationic phosphine complexes of gold(I): an electrospray mass spectrometric study" INORGANICA CHIMICA ACTA (1995), 231(1-2), 65-71 , 1995, XP002220105

## Description

### DESCRIPTION

This invention relates to gold compounds simultaneously coordinated by mono- and bidentate phosphines having antitumoral activity. More specifically, the invention concerns novel neutral or ionic metal complexes showing tumor cell growth-inhibiting activity, where each metal acceptor atom, consisting of gold of oxidation number 1, is simultaneously coordinated by a phosphine ligand of a monodentate type and by one of a bidentate type.

Numerous inorganic salts and metal salts are used in medicine in various therapeutic fields, but only two metal compounds have as yet been introduced in clinical practice as antitumor agents: cis-diamminedichloroplatinum(II) (cisplatin) and diammine-cyclobutanedicarboxylato-platinum(II) (carboplatin). The former compound was synthesized for the first time by Michele Peyrone and published in 1844, but its qualities as a tumor cell growth inhibitor were discovered only in 1965 (B. Rosemberg et al., *Nature, 205,* 698, **1965;** B. Rosemberg et al., *Nature, 222,* 385, **1969**). The second compound, a second generation-analogue of cisplatin (US patent 4140707, issued in 1979 to Research Corp.), obtained the approval of the Food and Drug Administration in 1989 for use in second-line treatment of ovarian carcinomas.

Some tumors immediately developed a resistance to the aforesaid compounds. The latter also have the inconvenience of having harmful side effects such as nephrotoxicity and hematotoxicity, as well as persisting damage to hearing. Particularly in recent times, research in the field of metal derivatives with antitumoral activity has aimed at treating tumors not treatable using platinum derivatives. A very interesting example of this are certain titanium derivatives that turned out to be active for the treatment of gastrointestinal tumors (Caruso F. et al., *J. Med. Chem., 43,* 3665-3670, **2000**; Italian patent application No. RM99A000633), while antitumoral platinum derivatives are inactive for these tumors.

Among the metal complexes that have been synthesized and studied within this line of research over the last fifteen years, particularly interesting are gold(l) complexes in which the metal acceptor is coordinated by phosphine ligands. In particular, the known complexes include monodentate phosphines, generally represented by formula I below, and bidentate phosphines, i.e. phosphines with two phosphorus atoms. Some examples of the latter are represented by formulas II and III below (1,2-bis(diphenylphosphino)ethane or dppe; 1,3-bis(diphenylphosphino)propane or dppp).

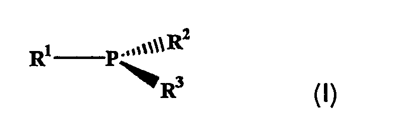

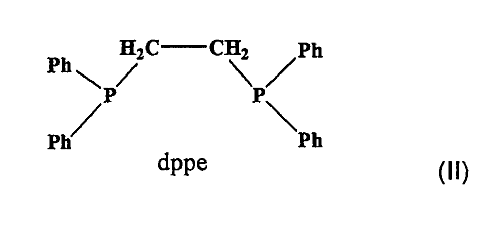

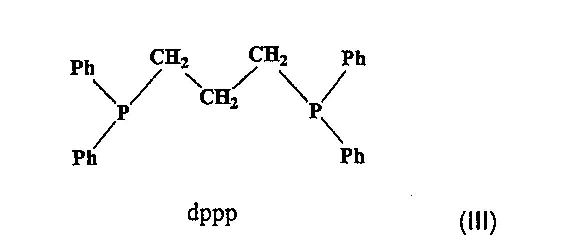

No exhaustive explanations have so far been provided as regards the action mechanism of gold-phosphine compounds. However, since the dppe (II) and dppp (III) phosphine ligands have a tumor cell growth inhibiting activity, even if not coordinated with the metal (Struck R. F., Shealy Y. F. *J. Med. Chem., 9*, 414-417, **1966**), it may be thought that the function of the gold(I) metal ion is that of acting as a simple carrier of the organic phosphine ligand inside tumor cells. There are, however, certain gold(III) complexes, which are electronically and geometrically equivalent to the aforesaid active derivatives of Pt(II), that have an antitumor activity even though they are not coordinated by phosphine ligands (US patent 4921847, relating to antitumoral derivatives of trihalo(amino)gold(III)). This led to the conclusion that also gold may play a specific role in tumor cell growth inhibiting activity. It is interesting to note that the chemical characteristics of gold differ considerably from those of Pt(II), especially as regards the affinity for amine ligands. This has suggested that gold complexes may interact with the double helix of DNA in a different way with respect to platinum derivatives.

Always as regards phosphine-coordinated gold complexes, it is also well-known that, while monodentate phosphines - i.e. phosphines containing only one phosphorus atom - do not have any detectable tumor cell growth inhibiting activity, gold-phosphine complexes containing a monodentate phosphine have been shown to have such an activity. More specifically, a gold-phosphine drug in which the metal is coordinated by a monodentate phosphine (triethylphosphine), auranofin, which is in consolidated use as an anti-rheumatic agent, has shown cytotoxic activity towards certain tumor cell lines *in vitro* (Simon, T.M. et al., *Cancer, 44*, 1965, **1979**; Mirabelli C. K. et al., *Cancer Res., 45,* 32-39, **1985**). In this case, too, no exhaustive explanations were provided as to the action mechanism concerned.

On the basis of knowledge gained in the field up to the 1980s, Susan J. Berners-Price and coworkers synthesized a broad group of metal-phosphine compounds in which the metal acceptor was coordinated by two bidentate phosphines, and they tested their antitumor activity (Berners-Price S. J., et al., *Cancer Research, 46*, 5486-5493, **1986**; US patent 5037812; Susan J. Berners-Price et al., *J. Med. Chem., 33,* 1386-1392, **1990**).

In particular, among the compounds containing gold as the metal acceptor, the most active ones turned out to be the cationic complexes [Au(dppe)₂]⁺ of formula (IV) and [Au(dppp)₂]⁺ of formula (V) (in which dppe = 1,2-bis(diphenylphosphino)ethane and dppp = 1,3-bis(diphenylphosphino) propane) having phenyl substituents on the phosphorus. These compounds and the corresponding neutral complexes (AuCl)(dppe)₂ and (AuCl)(dppp)₂ showed an increase in the lifespan of rats previously treated with leukemia tumors P338 and L1210 (Dong Y. et al. *Biochem. Pharmacol.* **1997**, *53*, 1673-1682).

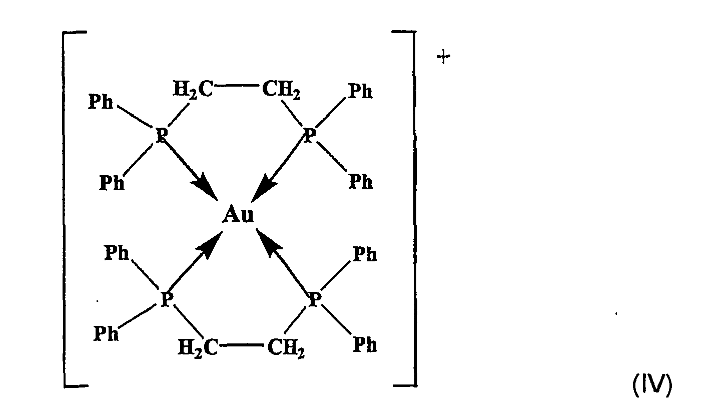

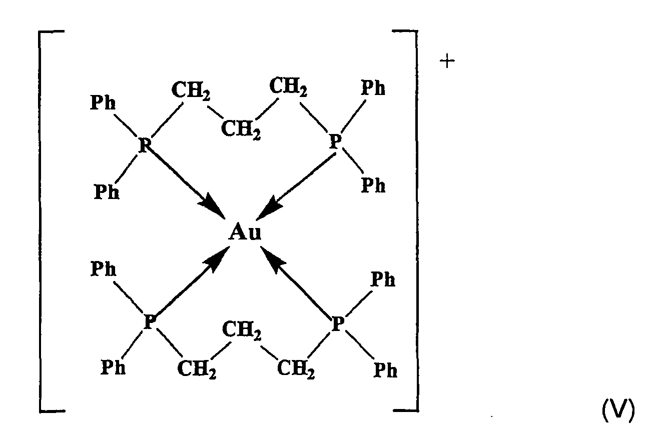

In the same period, other phosphine complexes, in which the acceptor metal was gold, were synthesized.

The US patent 4764509 in fact describes antitumoral pharmaceutical compositions containing dinuclear phosphine complexes in which each of the two gold atoms is coordinated with two phosphorus atoms of two different bidentate phosphines, having the following formula (VI): 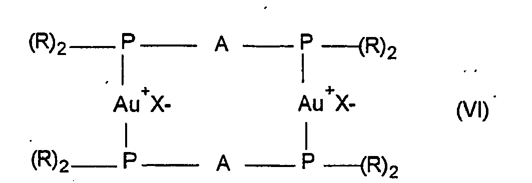 wherein the R substituents are the same and are phenyl or ethyl groups, the A groups are the same and represent methylene chains with a number of carbon atoms ranging from 1 to 6, and the X substituents are the same and are halogen.

Still in the field of gold-phosphine complexes, also complexes with pyridyl substituents on the phosphorus atom instead of phenyl and ethyl substituents have been tested. US patent 4902675 relates to antitumoral gold-phosphine complexes having the following formulas VII and VIII: 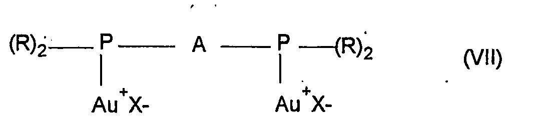 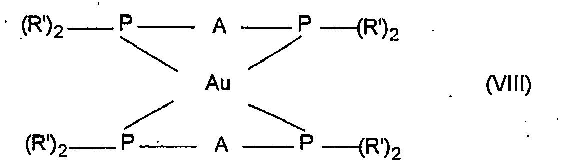 wherein the substituents R' are the same and are the 2-pyridyl group, while the R substituents are the same and are either the 2-pyridyl or the 4-pyridyl group, the A groups are the same and are alkylene chains of from 1 to 6 carbon atoms, and the X groups are the same and are halogen.

As mentioned above, the complexes of formulas IV and V and the corresponding neutral complexes (AuCl)(dppe)₂ and (AuCl)(dppp)₂ show a greater activity with respect to the other cited gold-phosphine complexes. In particular, the activity of compound [Au(dppe)₂]Cl (IV) produces effects on the mitochondria, as well as breaks in the DNA bonds and probably also in the DNA-protein interactions present in tumor cells. The great cytotoxic activity of this compound is linked to the presence of phenyl groups; however, the preliminary clinical study carried out with the cation Au(dppe)⁺ showed considerable toxicity at the hepatic, cardiac and vascular level, probably due to the high lipophilicity of the complex correlated to the presence of phenyl groups (Rush et al., *Toxicologist, 7*, 59, **1987**).

In order to reduce the side effects of this type of compounds, attempts have been made to modify their diffusion process across the cell membrane.

Recently, S. J. Berners-Price has tried to change the lipophilic/hydrophilic balance of gold-phosphine compounds wherein the acceptor metal is coordinated by bidentate phosphines. In particular, US patent 6159957 describes compounds similar to the species [Au(dppe)₂]⁺ in which one or more of the eight phenyl substituents are substituted by 2-, 3- or 4-pyridyl groups. The author ascertained that by using compounds with a lower lipophilicity and greater hydrophilicity, an increased antitumoral activity is detected, as well as a greater selectivity for certain tumor cells (Berners-Price S. J. et al., *Coord. Chem. Rev., 185-186,* 823-836, **1999**).

In view of the above, there is an evident need for having available still novel antitumor compounds which can carry out their activity with different action mechanisms and which thus can show their selectivity against different tumor cell lines.

In the frame of the studies carried out in connection with the present invention, gold-phosphine compounds have been hypothesized and successfully synthesized, wherein the gold(I) acceptor metal is coordinated by two or more phosphines that are structurally different from each other, i.e. monodentate phosphines and bidentate phosphines. These compounds thus differ from the ones described in the previous state of the art, which are gold complexes coordinated by phosphines all of the same type.

The compounds according to the present invention essentially have the following three types of structure:
- gold(I) mononuclear neutral complexes, wherein the metal is coordinated by a monodentate phosphine substituted by three aryl and/or alkyl groups and simultaneously by a bidentate phosphine - this results in the presence of three phosphorus atoms in the metal coordination sphere, which is completed by a negative ion such as a halogen ion;
- dinuclear neutral complexes, wherein each of the two gold atoms is co-ordinated with a monodentate phosphine and with only one phosphorus of the bidentate phosphine - the metal coordination sphere is completed by a negative ion such as a halogen ion;
- ionic complexes, wherein a gold(I) atom is coordinated by a monodentate phosphine substituted with three aryl and/or alkyl groups and simultaneously by a bidentate phosphine - in this case the anion (halogenide, chlorate or nitrate ion) is not part of the metal coordination sphere.

It has surprisingly been found that the gold-phosphine compounds according to the present invention are active against a wide range of tumor cell lines while, unlike the known gold-phosphine complexes, they do not seem to show activity against leukemia cell lines. Therefore, the compounds of the present invention are active tumor cell growth-inhibiting agents that can be used in the treatment of tumors that have developed a resistance to other antitumor agents.

In the more common case where the peripheral substituents are phenyl groups, the substitution of a bidentate phosphine with a monodentate phosphine, with respect to the already investigated complexes having two bidentate phosphines coordinated with the acceptor metal, leads to a reduction in lipophilicity thanks to the presence of a lower number of aromatic groups. In this way, also the toxicity of the compounds is advantageously reduced and, at the same time, an effective antitumor activity is surprisingly maintained.

In some of the compounds of the present invention, the substitution of a bidentate phosphine with a monodentate one leads to a reduced ionicity, allowing the counterion to take part in the metal coordination sphere. This property improves the capacity of the gold species to cross the cell membrane.

Moreover, the compounds of the present invention are stable in an aqueous medium and their synthesis is relatively simple and economical, above all in view of the fact that many of the starting reagents are commercially available products.

Therefore, the present invention specifically provides gold(I) compounds simultaneously coordinated by mono- and bidentate phosphines, having one of the following formulas A, B and C: 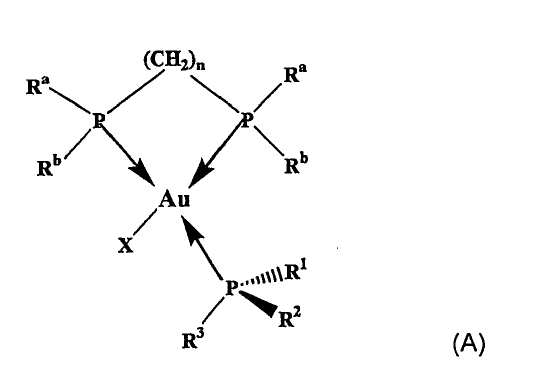 wherein R¹, R² and R³, which may be the same or different from each other, are selected from the group consisting of methyl, ethyl, propyl, butyl, phenyl, *p*-tolyl, *m*-tolyl, *o*-tolyl, mesityl, cyclohexyl or benzyl; R^{a} and R^{b}, which may be the same or different from each other, are methyl, ethyl, phenyl or cyclohexyl; n is an integer ranging between 1 and 5; X is Cl or Br; 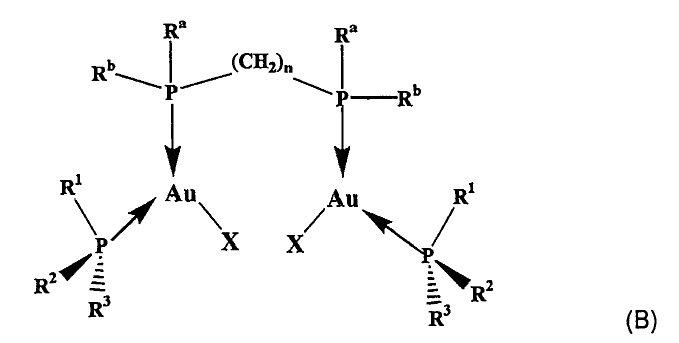 wherein R¹, R², R³, R^{a}, R^{b}, n, and X have the same meanings as in formula (A); 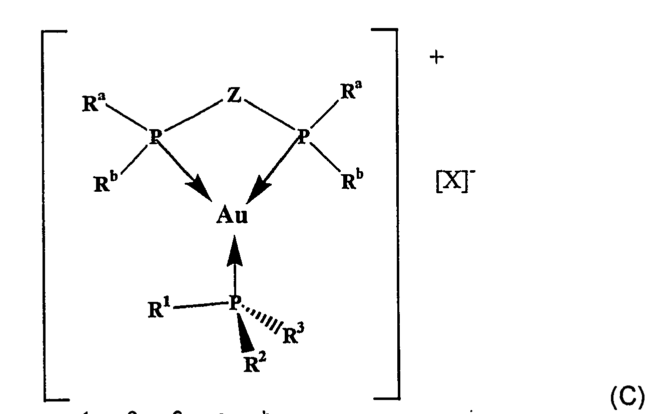 wherein R¹, R², R³, R^{a}, R^{b} have the same meanings as in formula (A); Z is (CH₂)ₙ with n equal to an integer ranging between 1 and 5, or is 4,4'-ferrocenyl; X is Br, I, NO₃ or ClO₄.

In the aforesaid compounds, the substituents R¹, R², R³, R^{a} and R^{b} are preferably the same and are phenyl groups.

In particular, among the compounds of formula (A), the preferred ones are chloro-triphenylphosphine-1,2-bis(diphenylphosphino)ethane-gold(I) and chloro-triphenylphosphine-1,3-bis(diphenylphosphino)propane-gold(I).

Among the compounds of formula (B), the preferred ones are bis[chloro-triphenylphosphine-gold(I)]-1,2-bis(diphenylphosphino)ethane and bis[chloro-triphenylphosphine-gold(I)]-1,3-bis(diphenylphosphino)propane.

Finally, among the compounds of formula (C), the preferred ones are [triphenylphosphine-gold(I)]-1,2-bis(diphenylphosphino)ethane perchlorate, [triphenylphosphine-gold(I)]-1,2-bis(diphenylphosphino) ethane nitrate, [triphenylphosphine-gold(I)]-1,3-bis(diphenylphosphino)propane perchlorate, [triphenylphosphine-gold(I)]-1,3-bis(diphenylphosphino)propane nitrate, [triphenylphosphine-gold(I)]-4,4'-bis(diphenylphosphino)ferrocene perchlorate, [triphenylphosphine-gold(I)]-4,4'-bis(diphenylphosphino)ferrocene nitrate.

As already noted, the compounds of the present invention can be advantageously used in medicine; therefore, the present invention further provides pharmaceutical compositions comprising at least one of the compounds of the aforesaid formulas (A), (B) and (C) as an active ingredient and one or more pharmaceutically acceptable adjuvants or excipients, which are already known to those skilled in the art and are currently used in pharmaceutical practice.

The present invention also specifically provides the use of the aforesaid compounds in the preparation of a medicament for the treatment of tumor pathologies such as, in particular, lung tumors, colon tumors, tumors of the central nervous system, melanomas, ovarian tumors, kidney tumors, prostate tumors and breast tumors. The latter tumor forms are in fact the ones against which the gold-phosphine complexes of the present invention have proved to be considerably active, as shown by the experimental data reported further on.

In cases where the composition according to the present invention should be administered through the intraperitoneal, intramuscular or intravenous route, the diluents of the composition can include, in the simplest cases, a sterile physiological saline solution or a sterile glucose solution.

According to some of its further aspects, the present invention refers to synthesis procedures for the preparation of gold complexes having general formulas (A), (B) and (C).

A first process for preparing the compounds of general formula (A) comprises the following steps:
a) mixing, either dissolved or suspended in a suitable solvent, equimolar quantities of a bidentate phosphine of the formula R^{a}R^{b}P(CH₂)ₙPR^{a}R^{b} wherein R^{a}, R^{b} and n have the same meanings as in formula (A) of claim 1, with a compound of the formula (R¹ R²R³P)AuX, wherein R¹, R², R³, and X have the same meanings as in formula (A) of claim 1;
b) keeping the mixture under stirring at room temperature and, finally, separating the resulting precipitate.

A process for preparing compounds of general formula (B) comprises the following steps:
a) mixing, either dissolved or suspended in a suitable solvent, a bidentate phosphine of the formula R^{a}R^{b}P(CH₂)ₙPR^{a}R^{b}, wherein R^{a}, R^{b} and n have the same meanings as in formula (B) of claim 1, with a compound of the formula (R¹R²R³P)AuX, wherein R¹, R², R³, and X have the same meanings as in formula (B) of claim 1, in a molar ratio less than or equal to 1:1.2;
b) keeping the mixture under stirring at room temperature and, finally, separating the resulting precipitate.

Moreover, a first process for preparing the compounds of general formula (C) comprises the following steps:
a) mixing, either dissolved or suspended in a suitable solvent, equimolar quantities of a bidentate phosphine of the formula R^{a}R^{b}P(CH₂)ₙPR^{a}R^{b}, wherein R^{a}, R^{b} and n have the same meanings as in formula (C) of claim 1, with a compound of the formula (R¹R²R³P)AuX, wherein R¹, R², R³, and X have the same meanings as in formula (C) of claim 1;
b) keeping the mixture under stirring at room temperature and, finally, separating the resulting precipitate;
c) mixing, dissolved in a suitable solvent, equimolar quantities of the compound obtained in step b) with AgY in which Y is Br, I, ClO₄ or NO₃ at room temperature;
d) filtering away the silver chloride produced and then separating the compound of the general formula (C) from the solution.

Suitable solvents are selected from the group consisting of dichloromethane, diethyl ether, chloroform and acetone.

Alternatively, the procedure for preparing compounds of formula (A) can comprise the slow diffusion of a solution of the aforesaid bidentate phosphine in diethyl ether, in a suspension of the aforesaid gold-monophosphine complex in dichloromethane. According to another alternative, the process for preparing compounds of formula (A) can comprise the slow diffusion of a dichloromethane solution of bidentate phosphine in a solution of the aforesaid gold-monophosphine complex in dichloromethane, by slowly evaporating the solvent.

According to another process for preparing compounds of general formula (C), one may start from a compound of general formula (R¹R²R³P)Au(R^{a}R^{b}P-Z-PR^{a}R^{b})Cl, wherein R¹, R², R³, R^{a}, R^{b} and Z have the meanings given for formula (C) of claim 1, and the perchlorate or nitrate anionic group may be introduced by reaction with equimolar quantities of AgY (Y = ClO₄ or NO₃) in dichloromethane or acetone.

The present invention will now be described for mere illustrative but not limitative purposes according to some of its preferred embodiments, with particular reference to the figures in the attached drawings, wherein:
Figure 1 shows the molecular structure, obtained by X-rays diffraction, of the crystalline compound chloro-triphenylphosphine-1,3-bis(diphenylphosphino)propane-gold(I) obtained according to Example 5 reported below; in the figure, the names of the C atoms are not given and the H atoms are not represented; and
Figure 2 shows the molecular structure, obtained by X-rays diffraction, of the crystalline compound bis(chloro-triphenylphosphine-gold(I))-1,2-bis(diphenylphosphino)ethane obtained according to Example 6 reported below; in the figure, the names of the C atoms are not given and the H atoms are not represented.

### EXAMPLE 1

### Preparation of a compound according to the general formula (A): chloro-triphenylphosphine-1,2-bis(diphenylphosphino)ethane-gold(I)

Formula: C₄₄H₃₉AuClP₃
Molecular weight: 893.14
0.80 g of 1,2-bis(diphenylphosphino)ethane (ca. 2.0 mmol) is added to a suspension (50 ml) of chloro-triphenylphosphine-gold(I) (1.00 g, about 2.0 mmol) in diethyl ether. A clear solution is obtained. After 2 hours of stirring, a white precipitate is obtained and stirring is continued for three days. The precipitate is then filtered and washed with diethyl ether. This yields 1.4 g of product (1.56 mmol, 78 %) m.p.: 173-175°C

| Analysis: | | |
|---|---|---|
| Estimated: | C, 59.17 | H, 4.4 |
| Found: | C, 59.32 | H, 4.45 |

¹H NMR (CDCl₃, δ ppm): 2.4 br (CH₂, 4H), 7.0-7.7m br (CH_{Ph}, 35H).
³¹P NMR (CDCl₃, δ ppm): -1.7 (br, PPh₃), 1.3 (br, 1,2-bis(diphenylphosphino)ethane).
IR (nujol mull, cm⁻¹): 3045w, 1585w, 1571w, 1434m, 1310sh, 1158br, 1099s, 1072w, 1026w, 998w, 965m, 825m, 799m, 761 m, 742s, 738m, 722m, 694s, 651 m, 617w, 554w, 512s, 482m br, 410m, 326m.

### EXAMPLE 2

### Preparation of a compound according to the general formula (A): chloro-triphenylphosphine-1,2-bis(diphenylphosphino)ethane-gold(I)

The compound of Example 1 was also prepared via slow diffusion of a solution of diphosphine ligand in diethyl ether (0.80 g, 2 mmol, 30 ml) in a suspension of chloro-triphenylphosphine-goid(l) (0.99 g, 2,0 mmol) in dichloromethane (50 ml). The reaction yield in this second case was 60%.

### EXAMPLE 3

### Preparation of a compound according to the general formula (A): chloro-triphenylphosphine-1,3-bis(diphenylphosphino)propane-gold(I)

Formula: C₄₅H₄₁AuClP₃
Molecular weight: 907.17
0.83 g of 1,3-bis(diphenylphosphino)propane (0.82 g, ca. 2.0 mmol) is added to a suspension (50 ml) of chloro-triphenylphosphine-gold(I) (1.00 g, about 2.0 mmol) in diethyl ether. A clear solution is obtained. The suspension is stirred for three days. The precipitate is washed with diethyl ether (20 ml) and then filtered. This yields 1.41 g (1.54 mmol, 77%) of the title compound; m.p.: 181-183° C.

| Element analysis | | |
|---|---|---|
| Estimated: | C, 59.42 | H, 4.32 |
| Found: | C, 59.28 | H, 4.50 |

¹H NMR (CDCl₃, δ ppm): 2.2 br (CH₂, 2H), 2.6br (CH₂, 4H), 7.0-7.7m br (CH_{Ph}, 35H).
³¹P NMR (CDCl₃, δ ppm): -1.7 (br, PPh₃), 25.6 (br, 1,3-bis(diphenylphosphino)propane).
IR (nujol mull, cm⁻¹): 3039w, 1584w, 1569w, 1436m, 1313m, 1196br, 1094s, 1070w, 1043w, 1026w, 998w, 971 m, 824m, 794m, 761 m, 747m, 738m, 722m, 710m, 697s, 648m, 617w, 530m, 515s, 508s, 491m, 470m, 429m, 357w

### EXAMPLE 4

### Preparation of a compound according to the general formula (A): chloro-triphenylphosphine-1,3-bis(diphenylphosphino)propane-gold(I)

The compound of Example 3 was also prepared via slow diffusion in diethyl ether (30 ml) of a solution of 1,3-bis(diphenylphosphino)propane (0.82 g, 2.0 mmol) in a suspension of chloro-triphenylphosphine-gold(I) (0.99 g, about 2.0 mmol) in dichloromethane (50 ml). The reaction yield in this case was 56%.

### EXAMPLE 5

### Preparation of a compound according to the general formula (A): chloro-triphenylphosphine-1,3-bis(diphenylphosphino)propane-gold(I)

The compound of Example 3 was also obtained in a crystalline form by adding a solution of 1,3-bis(diphenylphosphino)propane (0.014 g, 0.033 mmol) in dichloromethane (5 ml) to a solution of chloro-triphenylphosphine-goid(I) (0.016 g, 0.033 mmol) in dichloromethane (5 ml), by slowly evaporating the solvent. The crystals, analyzed by X-rays, are monocline, of space group P 2₁, and had the following crystalline reticular dimensions: a = 15,503(1) Å, b = 10,534(1) Å, c = 27,506(2) Å, β = 105,82(1)°, V = 4322(2) Å³. The corresponding molecular structure is shown in Figure 1.

### EXAMPLE 6

### Preparation of a compound according to the general formula (B): bis[chloro-triphenylphosphine-gold(I)]-1,2-bis(diphenylphosphino)ethane

The compound can be prepared by mixing a chloroform solution of chloro-triphenylphosphine-gold(I) (0.060 g, 0.012 mmol) with a chloroform solution of 1,2-bis(diphenylphosphino)ethane (0.040 g, 0.01 mmol). The solution is left to slowly evaporate. After 48h the product is obtained in crystalline form. The crystals, examined with X-rays, are tricline, of the space group P-1, and have the following crystalline reticular dimensions: a = 8,988(7) Å, b = 11,142(8) Å, c = 16,852(13) Å, α = 91,23(2)°, β = 92,86(2)°, γ = 108,16(2)°, V = 1600(2) Å³. The corresponding molecular structure is shown in Figure 2.

### EXAMPLE 7

### Preparation of a compound according to the general formula (C): [triphenylphosphine-gold(I)1-1,3-bis(diphenylphosphino)propane perchlorate

0.83 g of 1,3-bis(diphenylphosphino)propane (0.82 g, about 2.0 mmol) is added to a suspension (50 ml) of chloro-triphenylphosphine-gold(I) (1.00 g, about 2.0 mmol) in diethyl ether. A clear solution is obtained. The suspension is stirred for three days. The precipitate is washed with diethyl ether (20 ml) and then filtered.

The precipitate is then re-dissolved in dichloromethane. Silver perchlorate (0.41 g, 2.0 mmol) is added. A silver chloride precipitate is obtained. This is filtered to separate the silver chloride and then the solution is evaporated and the raw residue is washed with diethyl ether. This yields 0.971 g (1.0 mmol, 50%) of the title compound; m.p.: 185-186° C.

| Element analysis | | |
|---|---|---|
| Estimated: | C, 55.66 | H, 4.26 |
| Found: | C, 55.44 | H, 4.40 |

¹H NMR (CDCl₃, δ ppm): 2.3 br (CH₂, 2H), 2.6br (CH₂, 4H), 7.2-7.7m br (CH_{Ph}, 35H).
³¹P NMR (CDCl₃, δ ppm): -1.2 (br, PPh₃), 25.8 (br, 1,3-bis(diphenylphosphino)propane).
IR (nujol mull, cm⁻¹): 3039w, 1584w, 1569w, 1436m, 1313m, 1196br, 1094s, 1070w, 1070s, 1043w, 1026w, 998w, 971m, 824m, 794m, 761 m, 747m, 738m, 722m, 710m, 697s, 648m, 624s, 617w, 530m, 515s, 508s, 491 m, 470m, 429m, 357w.

### EXAMPLE 8

### Evaluation of the anti-tumor activity of the chloro-triphenylphosphine-1,3-bis(diphenylphosphino)propane-gold(I) complex

The *in vitro* study of antitumor activity was carried out in the United States of America at the National Cancer Institute (NCl) and consists of screening solutions of the title compound (obtained according to examples 3-5) with variable concentrations on 60 tumor cell lines classified into 9 typologies (leukemia, colon, melanoma, etc.). The procedures used are described in the literature (Monks A. et al., *J. Natl. Cancer Inst.* **1991**, 83, 757-766).

More specifically, the number of tumor cells corresponding to certain concentrations of the compound was determined. The solutions were gradually diluted decimally. The concentration interval was 10⁻⁸-10⁻⁴M. The data were compared with control solutions that had not received the pharmaceutical composition. The LC₅₀ parameter, used as an evaluation index for anti-tumor activity, identified the value of compound concentration corresponding to 50% of the tumor cells initially incubated: i.e. the value corresponding to the concentration at which half of the tumor cells were suppressed by the drug.

The chloro-triphenylphosphine-1,3-bis(diphenylphosphino)-propane-gold(I) complex presents cytotoxicity for 27 of the 60 different tumors examined, as shown in the following Table 1, and thus has a broad action range. For the remaining 33 tumors, the compound proves to be inactive or not sufficiently active for further pharmacological development.

**TABLE 1**

| **Cell lines** | **LC50** |
|---|---|
| ***Non-small lung tumor cells*** | |
| HOP-62 | 4,70 × 10⁻⁶ |
| HOP-92 | 2,00 × 10⁻⁶ |
| NCI-H322M | 4,24 × 10⁻⁶ |

| ***Cancer of the colon*** | |
|---|---|
| COLO 205 | 7,27 × 10⁻⁶ |
| HCC-2998 | 4,72 × 10⁻⁶ |
| HCT-116 | 4,15 × 10⁻⁶ |
| HCT-15 | 5,50 × 10⁻⁶ |

| ***Cancer of the central nervous system*** | |
|---|---|
| SF-268 | 6,02 × 10⁻⁶ |
| SF-295 | 4,02 × 10⁻⁶ |
| SNB-19 | 4,58 × 10⁻⁶ |
| SNB-75 | 4,12 × 10⁻⁶ |

| ***Melanoma*** | |
|---|---|
| LOX IMVI | 4,20 × 10⁻⁶ |
| MALME-3M | 6,32 × 10⁻⁶ |
| M14 | 5,95 × 10⁻⁶ |
| SK-MEL-28 | 2,27 × 10⁻⁵ |
| UACC-257 | 1,48 × 10⁻⁵ |
| UACC-62 | 5,34 × 10⁻⁶ |

| ***Cancer of the ovaries*** | |
|---|---|
| OVCAR-3 | 2,67 × 10⁻⁶ |
| OVCAR-4 | 5,43 × 10⁻⁶ |
| OVCAR-5 | 6,41 × 10⁻⁶ |
| SK-OV-3 | 4,34 × 10⁻⁶ |

| ***Cancer of the kidney*** | |
|---|---|
| A498 | 6,10 × 10⁻⁶ |
| ACHN | 3,48 × 10⁻⁶ |
| CAKI-1 | 6,15 × 10⁻⁶ |
| RXF 393 | 5,23 × 10⁻⁶ |
| TK-10 | 8,23 × 10⁻⁶ |
| UO-31 | 4,15 × 10⁻⁶ |

It must be noted that the six leukemia tumors analyzed did not prove to be sensitive to the examined compound. In fact, for these tumors, the value of LC₅₀ corresponds to a concentration of the compound higher than 10⁻⁴M. Such a concentration would indicate the unsuitability of the tested compound as a drug to combat this type of tumors. This anti-leukemia inactivity is a novelty because the exact opposite has been found in the literature as regards anti-tumor gold-phosphine substances (Hoke G. D. et al., Mol. Pharmacol. **1990**, 39, 90; Dong Y. et al. G. Biochem. Pharmacol. **1997**, 53, 1673- 1682). As already noted, this suggests a different action mechanism for the examined compound.

There may be concluded that the tested gold-phosphine complex is endowed with antitumor activity and is effective against many tumor lines. Since the compound resulted inactive against leukemia tumor lines, its mechanism of action is different from the one observed for other gold-phosphine compounds described in the literature that are active against leukemia.

## Claims

1. Gold(I) compounds simultaneously coordinated by mono- and bidentate phosphines, having one of the following formulas A, B and C: 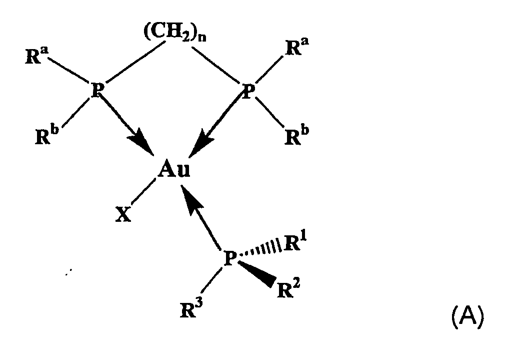 wherein R¹, R² and R³, which may be the same or different from each other, are selected from the group consisting of methyl, ethyl, propyl, butyl, phenyl, *p*-tolyl, *m*-tolyl, *o*-tolyl, mesityl, cyclohexyl or benzyl; R^{a} and R^{b}, which may be the same or different from each other, are methyl, ethyl, phenyl or cyclohexyl; n is an integer ranging between 1 and 5; X is Cl or Br; 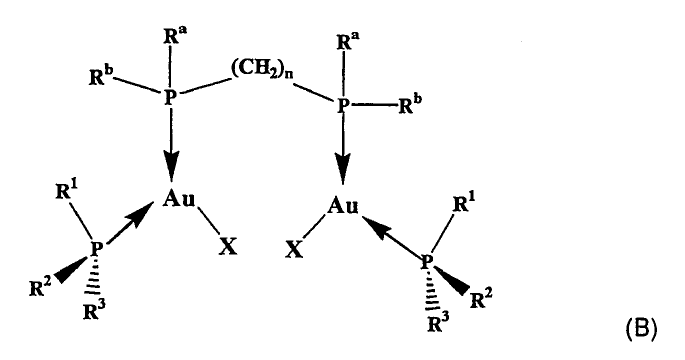 wherein R¹ R², R³, R^{a}, R^{b}, n, and X have the same meanings as in formula (A); 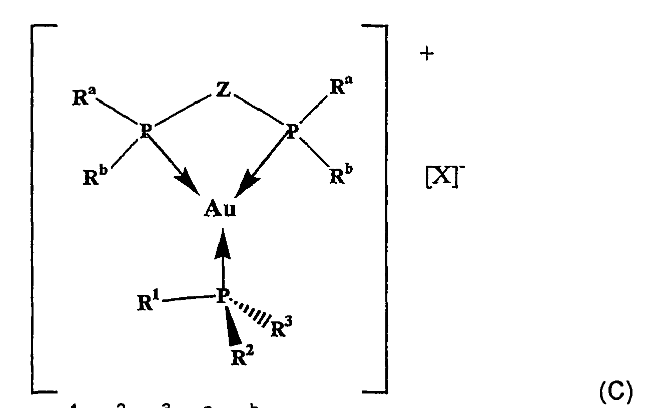 wherein R¹, R², R³, R^{a}, R^{b} have the same meanings as in formula (A); Z is (CH₂)ₙ with n equal to an integer ranging between 1 and 5, or is 4,4'-ferrocenyl; X is Br, I; NO₃ or ClO₄.

2. The compounds according to claim 1, wherein the substituents R¹, R², R³, R^{a} and R^{b} are the same and are phenyl groups.

3. The compounds according to claim 1 of general formula (A), selected from the group consisting of chloro-triphenylphosphine-1,2-bis(diphenylphosphino)ethane-gold(I) and chloro-triphenylphosphine-1,3-bis(diphenylphosphino)propane-gold(I).

4. The compounds according to claim 1 of general formula (B), selected from the group consisting of bis(chloro-triphenylphosphine-gold(I))-1,2-bis(diphenylphosphino)ethane and bis(chloro-triphenylphosphine-gold(I))-1,3-bis(diphenylphosphino)propane.

5. The compounds according to claim 1 of general formula (C), selected from the group consisting of [triphenylphosphine-gold(I)]-1,2-bis(diphenylphosphino)ethane perchlorate, [triphenylphosphine-gold(I)]-1,2-bis(diphenylphosphino) ethane nitrate, [triphenylphosphine-gold(I)]-1,3-bis(diphenylphosphino)propane perchlorate, [triphenylphosphine-gold(I)]-1,3-bis(diphenylphosphino)propane nitrate, [triphenylphosphine-gold(I)]-4,4'-bis(diphenylphosphino)ferrocene perchlorate, [triphenylphosphine-gold(I)]-4,4'-bis (diphenylphosphino)ferrocene nitrate.

6. A compound according to claims 1-5 for use as a medicament.

7. A pharmaceutical composition comprising as an active ingredient at least one of the compounds of formulas (A), (B) and (C) of claim 1, together with one or more pharmaceutically acceptable adjuvants or excipients.

8. Use of a compound according to claims 1-5 for the preparation of a medicament for the treatment of tumor pathologies.

9. Use according to claim 8, wherein said tumor pathologies are lung tumors, colon tumors, tumors of the central nervous system, melanomas, ovarian tumors, kidney tumors, prostate tumors and breast tumors.

10. A process for the preparation of the compounds of general formula (A) according to claim 1 comprising the following steps:
a) mixing, either dissolved or suspended in a suitable solvent, equimolar quantities of a bidentate phosphine of the formula R^{a}R^{b}P(CH₂)ₙPR^{a}R^{b} wherein R^{a}, R^{b} and n have the same meanings as in formula (A) of claim 1, with a compound of the formula (R¹R²R³P)AuX, wherein R¹, R², R³, and X have the same meanings as in formula (A) of claim 1;
b) keeping the mixture under stirring at room temperature and, finally, separating the resulting precipitate.

11. A process for the preparation of the compounds of general formula (B) according to claim 1 comprising the following steps:
a) mixing, either dissolved or suspended in a suitable solvent, a bidentate phosphine of the formula R^{a}R^{b}P(CH₂)ₙPR^{a}R^{b}, wherein R^{a}, R^{b} and n have the same meanings as in formula (B) of claim 1, with a compound of the formula (R¹R²R³P)AuX, wherein R¹, R², R³, and X have the same meanings as in formula (B) of claim 1, in a molar ratio less than or equal to 1:1.2;
b) keeping the mixture under stirring at room temperature and, finally, separating the resulting precipitate.

12. A process for the preparation of the compounds of general formula (C) according to claim 1 comprising the following steps:
a) mixing, either dissolved or suspended in a suitable solvent, equimolar quantities of a bidentate phosphine of the formula R^{a}R^{b}P(CH₂)ₙPR^{a}R^{b}, wherein R^{a}, R^{b} and n have the same meanings as in formula (C) of claim 1, with a compound of the formula (R¹R²R³P)AuX, wherein R¹, R², R³, and X have the same meanings as in formula (C) of claim 1;
b) keeping the mixture under stirring at room temperature and, finally, separating the resulting precipitate;
c) mixing, dissolved in a suitable solvent, equimolar quantities of the compound obtained in step b) with AgY in which Y is Br, I, ClO₄ or NO₃ at room temperature;
d) filtering away the silver chloride produced and then separating the compound of the general formula (C) from the solution.

13. A process according to claims 10-12, wherein the said solvents are selected from the group consisting of dichloromethane, diethyl ether, chloroform and acetone.

14. A process for the preparation of the compounds of formula (A) according to claim 1 comprising the slow diffusion of a suspension of a bidentate phosphine of formula R^{a}R^{b}P(CH₂)ₙPR^{a}R^{b}, wherein R^{a}, R^{b} and n have the same meanings as in formula (A) of claim 1, in diethyl ether in a suspension of (R¹R²R³P)AuX in dichloromethane, wherein R¹, R² and R³ have the same meanings as in formula (A) of claim 1.

15. A process for the preparation of the compounds of formula (A) according to claim 1 comprising the slow diffusion of a suspension of a bidentate phosphine of formula R^{a}R^{b}P(CH₂)ₙPR^{a}R^{b}, wherein R^{a}, R^{b} and n are have the same meanings as in formula (A) of claim 1, in dichloromethane in a suspension of (R¹R²R³P)AuX in dichloromethane, wherein R¹, R² and R³ have the same meanings as in formula (A) of claim 1, by slowly evaporating the solvent.

16. A process for the preparation of the compounds of general formula (C) according to claim 1, starting from a compound of general formula (R¹R²R³P)Au(R^{a}R^{b}P-Z-PR^{a}R^{b})Cl, wherein R¹, R², R³, R^{a} R^{b} and Z have the same meanings as in formula (C) of claim 1 by reaction with equimolar quantities of AgY (Y = ClO₄ or NO₃) in dichloromethane or acetone.

## Patentansprüche

1. Gold(I)-Verbindungen, die gleichzeitig von einzähnigen und zweizähnigen Phosphinen koordiniert werden, mit einer der folgenden Formeln A, B und C: 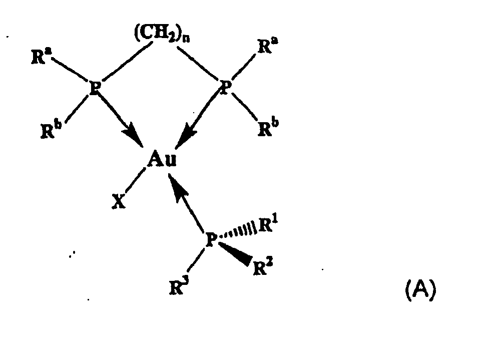 worin R¹, R² und R³, welche gleich oder verschieden voneinander sein können, aus der Gruppe, welche aus Methyl, Ethyl, Propyl, Butyl, Phenyl, p-Tolyl, m-Tolyl, o-Tolyl, Mesityl, Cyclohexyl oder Benzyl besteht, ausgewählt sind; R^{a} und R^{b}, welche gleich oder verschieden voneinander sein können, Methyl, Ethyl, Phenyl oder Cyclohexyl sind; n eine ganze Zahl im Bereich zwischen 1 und 5 ist; X Cl oder Br ist; 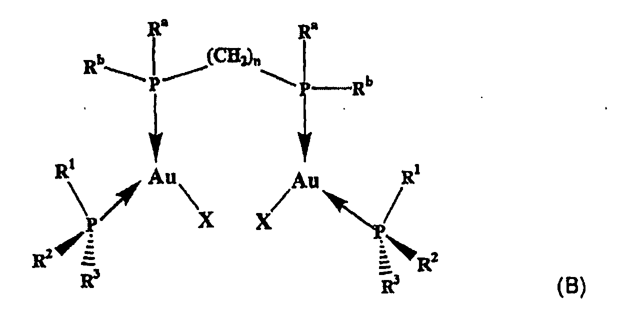 worin R¹, R², R³, R^{a}, R^{b}, n und X dieselben Bedeutungen wie in Formel (A) haben; 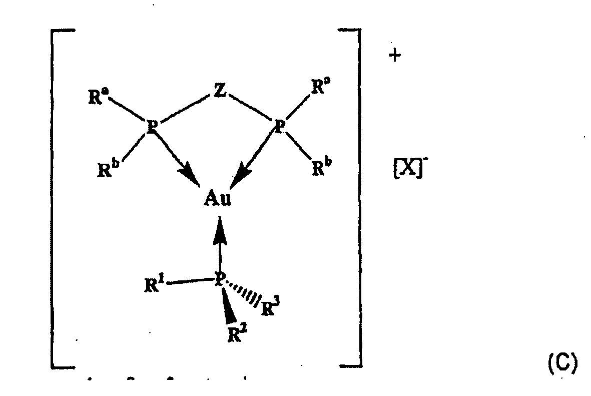 worin R¹, R², R³, R^{a}, R^{b} dieselben Bedeutungen wie in Formel (A) haben, Z (CH₂)ₙ, wobei n gleich einer ganzen Zahl im Bereich zwischen 1 und 5 ist, oder 4,4'-Ferrocenyl ist; X Br, I, NO₃ oder ClO₄ ist.

2. Verbindungen nach Anspruch 1, wobei die Substituenten R¹, R², R³, R^{a} und R^{b} gleich und Phenylgruppen sind.

3. Verbindungen nach Anspruch 1 der allgemeinen Formel (A), ausgewählt aus der Gruppe, die aus Chlortriphenylphosphin-1,2-bis(diphenylphosphino)ethan-Gold(I) und Chlortriphenylphosphin-1,3-bis(diphenylphosphino)propan-Gold(I) besteht.

4. Verbindungen nach Anspruch 1 der allgemeinen Formel (B), ausgewählt aus der Gruppe, die aus Bis(chlor-triphenylphosphin-Gold(I))-1,2-bis(diphenylphosphino)ethan und Bis(chlortriphenylphosphin-Gold(I))-1,3-bis(diphenylphosphino)propan besteht.

5. Verbindungen nach Anspruch 1 der allgemeinen Formel (C), ausgewählt aus der Gruppe, die aus [Triphenylphosphin-Gold(I)]-1,2-bis(diphenylphosphino)ethan-Perchlorat, [Triphenylphosphin-Gold(I)]-1,2-bis(diphenylphosphino)ethan-Nitrat, [Triphenylphosphin-Gold(I)]-1,3-bis(diphenylphosphino)propan-Perchlorat, [Triphenylphosphin-Gold(I)]-1,3-bis(diphenylphosphino)propan-Nitrat, [Triphenylphosphin-Gold(I)]-4,4'-bis(diphenylphosphino)ferrocen-Perchlorat, [Triphenylphosphin-Gold (I)]-4,4'-bis(diphenylphosphino)ferrocen-Nitrat besteht.

6. Verbindung nach den Ansprüchen 1 - 5 zur Verwendung als Medikament.

7. Pharmazeutische Zusammensetzung, umfassend als aktiven Bestandteil mindestens eine der Verbindungen der Formeln (A), (B) und (C) von Anspruch 1 zusammen mit einem oder mehreren pharmazeutisch annehmbaren Adjuvantien oder Exzipienten.

8. Verwendung einer Verbindung nach den Ansprüchen 1 - 5 zur Herstellung eines Medikaments zur Behandlung von Tumor-Pathologien.

9. Verwendung nach Anspruch 8, wobei die Tumor-Pathologien Lungentumore, Dickdarmtumore, Tumore des Zentralnervensystems, Melanome, Eierstocktumore, Nierentumore, Prostatatumore und Brusttumore sind.

10. Verfahren zur Herstellung der Verbindungen der allgemeinen Formel (A) nach Anspruch 1, umfassend die folgenden Schritte:
a) Mischen, entweder gelöst oder suspendiert in einem geeigneten Lösungsmittel, von äquimolaren Mengen eines zweizähnigen Phosphins der Formel R^{a}R^{b}P(CH₂)ₙPR^{a}R^{b}, worin R^{a}, R^{b} und n dieselben Bedeutungen wie in Formel (A) von Anspruch 1 haben, mit einer Verbindung der Formel (R¹R²R³P)AuX, worin R¹, R², R³ und X dieselben Bedeutungen wie in Formel (A) von Anspruch 1 haben;
b) Halten der Mischung unter Rühren bei Raumtemperatur und schließlich Abtrennen des resultierenden Präzipitats.

11. Verfahren zur Herstellung der Verbindungen der allgemeinen Formel (B) nach Anspruch 1, umfassend die folgenden Schritte:
a) Mischen, entweder gelöst oder suspendiert in einem geeigneten Lösungsmittel, eines zweizähnigen Phosphins der Formel R^{a}R^{b}P(CH₂)ₙPR^{a}R^{b}, worin R^{a}, R^{b} und n dieselben Bedeutungen wie in Formel (B) von Anspruch 1 haben, mit einer Verbindung der Formel (R¹R²R³P)AuX, worin R¹, R², R³ und X dieselben Bedeutungen wie in Formel (B) von Anspruch 1 haben, in einem Molverhältnis von weniger als oder gleich 1:1,2;
b) Halten der Mischung unter Rühren bei Raumtemperatur und schließlich Abtrennen des resultierenden Präzipitats.

12. Verfahren zur Herstellung der Verbindungen der allgemeinen Formel (C) nach Anspruch 1 umfassend die folgenden Schritte:
a) Mischen, entweder gelöst oder suspendiert in einem geeigneten Lösungsmittel, von äquimolaren Mengen eines zweizähnigen Phosphins der Formel R^{a}R^{b}P(CH₂)ₙPR^{a}R^{b}, worin R^{a}, R^{b} und n dieselben Bedeutungen wie in Formel (C) von Anspruch 1 haben, mit einer Verbindung der Formel (R¹R²R³P)AuX, worin R¹, R², R³ und X dieselben Bedeutungen wie in Formel (C) von Anspruch 1 haben;
b) Halten der Mischung unter Rühren bei Raumtemperatur und schließlich Abtrennen des resultierenden Präzipitats;
c) Mischen, gelöst in einem geeigneten Lösungsmittel, von äquimolaren Mengen der in Schritt b) erhaltenen Verbindung mit AgY, worin Y Br, I, ClO₄ oder NO₃ ist, bei Raumtemperatur;
d) Abfiltrieren des gebildeten Silberchlorids und dann Abtrennen der Verbindung der allgemeinen Formel (C) von der Lösung.

13. Verfahren nach den Ansprüchen 10 - 12, wobei die Lösungsmittel aus der Gruppe ausgewählt sind, die aus Dichlormethan, Diethylether, Chloroform und Aceton besteht.

14. Verfahren zur Herstellung der Verbindungen der Formel (A) nach Anspruch 1, umfassend die langsame Diffusion einer Suspension eines zweizähnigen Phosphins der Formel R^{a}R^{b}P(CH₂)ₙPR^{a}R^{b}, worin R^{a}, R^{b} und n dieselben Bedeutungen wie in Formel (A) von Anspruch 1 haben, in Diethylether in eine Suspension von (R¹R²R³P)AuX in Dichlormethan, worin R¹, R² und R³ dieselben Bedeutungen wie in Formel (A) von Anspruch 1 haben.

15. Verfahren zur Herstellung der Verbindungen der Formel (A) nach Anspruch 1, umfassend die langsame Diffusion einer Suspension eines zweizähnigen Phosphins der Formel R^{a}R^{b}P(CH₂)ₙPR^{a}R^{b}, worin R^{a}, R^{b} und n dieselben Bedeutungen wie in Formel (A) von Anspruch 1 haben, in Dichlormethan in eine Suspension von (R¹R²R³P)AuX in Dichlormethan, worin R¹, R² und R³ dieselben Bedeutungen wie in Formel (A) von Anspruch 1 haben, durch langsame Verdampfung des Lösungsmittels.

16. Verfahren zur Herstellung der Verbindungen der allgemeinen Formel (C) nach Anspruch 1, ausgehend von einer Verbindung der allgemeinen Formel (R¹R²R³P)Au(R^{a}R^{b}P-Z-PR^{a}R^{b})Cl, worin R¹, R², R³, R^{a}, R^{b} und Z dieselben Bedeutungen wie in Formel (C) von Anspruch 1 haben, durch Umsetzung mit äquimolaren Mengen von AgY(Y = ClO₄ oder NO₃) in Dichlormethan oder Aceton.

## Revendications

1. Composés d'or (I) coordonnés simultanément par des phosphines monodentate et bidentate, répondant à l'une des formules A, B et C suivantes: 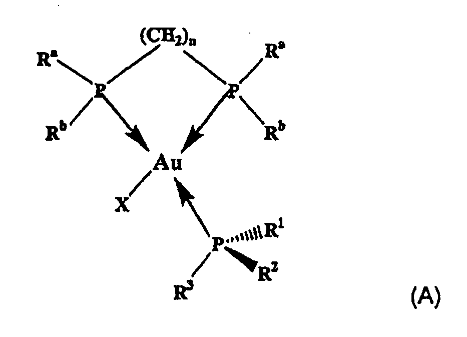 où R¹, R² et R³, qui peuvent être identiques ou différents les uns des autres, sont choisis dans le groupe constitué par les radicaux méthyle, éthyle, propyle, butyle, phényle, *p*-tolyle, *m*-tolyle, *o*-tolyle, mésityle, cyclohexyle ou benzyle; R^{a} et R^{b}, qui peuvent être identiques ou différents les uns des autres, sont des radicaux méthyle, éthyle, phényle ou cyclohexyle; n est un nombre entier compris entre 1 et 5; X représente Cl ou Br; 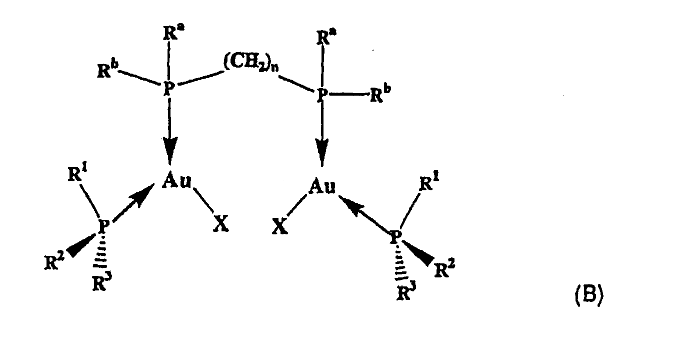 où R¹, R², R³, R^{a}, R^{b}, n et X ont les mêmes significations que dans la formule (A), 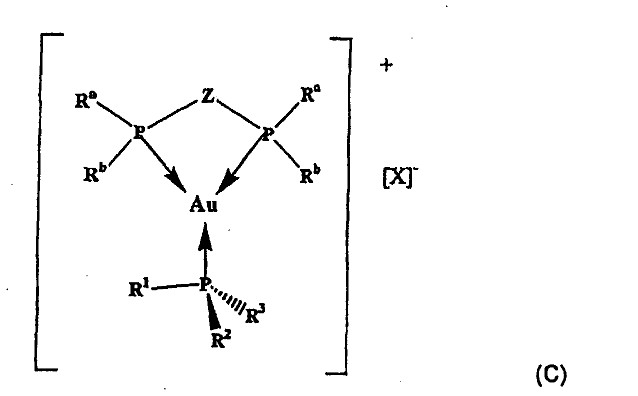 où R¹, R², R³, R^{a}, R^{b} ont les mêmes significations que dans la formule (A); Z représente (CH₂)ₙ, n étant égal à un nombre entier compris entre 1 et 5, ou un groupe 4,4'-ferrocényle; X représente Br, 1, NO₃ ou ClO₄.

2. Composés selon la revendication 1, dans lesquels les substituants R¹, R², R³, R^{a} et R^{b} sont identiques et sont des groupes phényle.

3. Composés selon la revendication 1 de formule générale (A), choisis dans le groupe constitué par le chloro-triphénylphosphine-1,2-bis(diphénylphosphino)éthane-or(I) et le chloro-triphénylphosphine-1,3-bis(diphénylphosphino)propane-or(I).

4. Composés selon la revendication 1 de formule générale (B), choisis dans le groupe constitué par le bis(chloro-triphénylphosphine-or(I))-1,2-bis(diphénylphosphino)éthane et le bis(chloro-triphénylphosphine-or(I))-1,3-bis (diphénylphosphino)propane.

5. Composés selon la revendication 1 de formule générale (C), choisis dans le groupe constitué par le perchlorate de [triphénylphosphine-or(I)]-1,2-bis(diphénylphosphino)éthane, le nitrate de [triphénylphosphine-or(I)]-1,2-bis(diphénylphosphino)éthane, le perchlorate de [triphénylphosphine-or(I)]-1,3-bis(diphénylphosphino)propane, le nitrate de [triphénylphosphine-or(I)]-1,3-bis(diphénylphosphino)propane, le perchlorate de [triphénylphosphine-or(I)]-4,4'-bis(diphénylphosphino)ferrocène, le nitrate de [triphénylphosphine-or(I)]-4,4'-bis(diphénylphosphino)ferrocène.

6. Composé selon les revendications 1 à 5, à utiliser comme médicament.

7. Composition pharmaceutique comprenant, comme principe actif, au moins l'un des composés de formules (A), (B) et (C) de la revendication 1, ainsi qu'un ou plusieurs adjuvants ou excipients acceptables sur le plan pharmaceutique.

8. Utilisation d'un composé selon les revendications 1 à 5 pour la préparation d'un médicament destiné au traitement des pathologies tumorales.

9. Utilisation selon la revendication 8, dans laquelle lesdites pathologies tumorales sont les tumeurs du poumon, les tumeurs du côlon, les tumeurs du système nerveux central, les mélanomes, les tumeurs des ovaires, les tumeurs rénales, les tumeurs de la prostate et les tumeurs du sein.

10. Procédé pour la préparation des composés de formule générale (A) selon la revendication 1, comprenant les étapes suivantes qui consistent à:
a) mélanger, soit sous forme dissoute soit en suspension dans un solvant approprié, des quantités équimolaires d'une phosphine bidentate de formule R^{a}R^{b}P(CH₂)ₙPR^{a}R^{b}, dans laquelle R^{a}, R^{b} et n ont les mêmes significations que dans la formule (A) de la revendication 1, avec un composé de formule (R¹R²R³P)AuX, dans laquelle R¹, R², R³ et X ont les mêmes significations que dans la formule (A) de la revendication 1;
b) maintenir le mélange sous agitation à température ambiante et enfin, séparer le précipité résultant.

11. Procédé pour la préparation des composés de formule générale (B) selon la revendication 1, comprenant les étapes suivantes qui consistent à:
a) mélanger, soit sous forme dissoute soit en suspension dans un solvant approprié, une phosphine bidentate de formule R^{a}R^{b}P(CH₂)ₙPR^{a}R^{b}, dans laquelle R^{a}, R^{b} et n ont les mêmes significations que dans la formule (B) de la revendication 1, avec un composé de formule (R¹R²R³P)AuX, dans laquelle R¹, R², R³ et X ont les mêmes significations que dans la formule (B) de la revendication 1, dans un rapport molaire inférieur ou équal à 1/1,2;
b) maintenir le mélange sous agitation à température ambiante et enfin, séparer le précipité résultant.

12. Procédé pour la préparation des composés de formule générale (C) selon la revendication 1, comprenant les étapes suivantes qui consistent à:
a) mélanger, soit sous forme dissoute soit en suspension dans un solvant approprié, des quantités équimolaires d'une phosphine bidentate de formule R^{a}R^{b}P(CH₂)ₙPR^{a}R^{b}, dans laquelle R^{a}, R^{b} et n ont les mêmes significations que dans la formule (C) de la revendication 1, avec un composé de formule (R¹R²R³P)AuX, dans laquelle R¹, R², R³ et X ont les mêmes significations que dans la formule (C) de la revendication 1;
b) maintenir le mélange sous agitation à température ambiante et enfin, séparer le précipité résultant;
c) mélanger, sous forme dissoute dans un solvant approprié, des quantités équimolaires du composé obtenu dans l'étape b) avec AgY, dans lequel Y représente Br, I, ClO₄ ou NO₃ à température ambiante;
d) éliminer par filtration le chlorure d'argent produit et ensuite, séparer le composé de formule générale (C) de la solution.

13. Procédé selon les revendications 10 à 12, dans lequel lesdits solvants sont choisis dans le groupe constitué par le dichlorométhane, l'éther diéthylique, le chloroforme et l'acétone.

14. Procédé pour la préparation des composés de formule (A) selon la revendication 1, comprenant la lente diffusion d'une suspension d'une phosphine bidentate de formule R^{a}R^{b}P(CH₂)ₙPR^{a}R^{b}, dans laquelle R^{a}, R^{b} et n ont les mêmes significations que dans la formule (A) de la revendication 1, dans l'éther diéthylique, dans une suspension de (R¹R²R³P)AuX dans le dichlorométhane, où R¹, R² et R³ ont les mêmes significations que dans la formule (A) de la revendication 1.

15. Procédé pour la préparation des composés de formule (A) selon la revendication 1, comprenant la lente diffusion d'une suspension d'une phosphine bidentate de formule R^{a}R^{b}P(CH₂)ₙPR^{a}R^{b}, dans laquelle R^{a}, R^{b} et n ont les mêmes significations que dans la formule (A) de la revendication 1, dans le dichlorométhane, dans une suspension de (R¹R²R³P)AuX dans le dichlorométhane, où R¹, R² et R³ ont les mêmes significations que dans la formule (A) de la revendication 1, par évaporation lente du solvant.

16. Procédé pour la préparation des composés de formule générale (C) selon la revendication 1, à partir d'un composé de formule générale (R¹R²R³P)Au(R^{a}R^{b}P-Z-PR^{a}R^{b})Cl, dans laquelle R¹, R², R³, R^{a}, R^{b} et Z ont les mêmes significations que dans la formule (C) de la revendication 1, par réaction avec des quantités équimolaires de AgY (Y=ClO₄ ou NO₃) dans le dichlorométhane ou l'acétone.
